**Europäisches Patentamt**

**European Patent Office**

**Office européen des brevets**

(19)

(11) Veröffentlichungsnummer: **0 027 878**
**B1**

(12) EUROPÄISCHE PATENTSCHRIFT

(45) Veröffentlichungstag der Patentschrift:
22.08.84

(51) Int. Cl.³: **H 02 M 7/08, H 02 M 1/00**

(21) Anmeldenummer: **80105292.9**

(22) Anmeldetag: **04.09.80**

(54) **Gleichrichteranlage in sechs- oder zwölfpulsiger Saugdrosselschaltung.**

(30) Priorität: **20.09.79 DE 2937947**

(43) Veröffentlichungstag der Anmeldung:
**06.05.81 Patentblatt 81/18**

(45) Bekanntmachung des Hinweises auf die Patenterteilung:
**22.08.84 Patentblatt 84/34**

(84) Benannte Vertragsstaaten:
**DE NL**

(56) Entgegenhaltungen:
**CH - A - 285 929**
**CH - A - 376 574**
**CH - A - 405 493**
**DE - A - 1 439 239**
**DE - A - 2 317 117**
**US - A - 3 068 391**

(73) Patentinhaber: **SIEMENS AKTIENGESELLSCHAFT,**
**Berlin und München Wittelsbacherplatz 2,**
**D-8000 München 2 (DE)**

(72) Erfinder: **Bardahl, Nils, Dr.,**
**Albert-Schweitzer-Strasse 15, D-8521 Uttenreuth (DE)**

## Beschreibung

Die Erfindung betrifft eine Gleichrichteranlage in sechs- oder zwölfpulsiger Saugdrosselschaltung mit gekühlten, im Querschnitt rechteckigen Stromschienen, auf denen die Halbleiterventile bzw. die zugehörigen Sicherungen angeordnet sind, mit aus den Gleichstrom führenden Schienen und je einer zusätzlichen Verbindungsschiene gebildeten E-förmigen Sternen, wobei parallel zu den die Schenkel des Sternes bildenden Gleichstromschienen Wechselstromschienen angeordnet sind und aus dem E-förmigen Stern, den Wechselstromschienen und einem Tragrahmen, auf dem die Verbindungsschiene über Isolatoren abgestützt ist, eine selbsttragende Baueinheit gebildet ist.

Eine solche Gleichrichteranlage ist aus der DE-A-2 317 117 bekannt. Dabei sind die Phasenleiter der im Stern geschalteten beiden dreiphasigen Teilsysteme an je eine Anschlussschiene geführt. Jeder dieser drehstromseitigen Anschlussschienen ist der Schenkel einer E-förmig ausgebildeten Gleichstromschiene elektrisch und mechanisch zugeordnet, so dass die beiden dreiphasigen Teilsysteme je zwei E-förmige Sterne bilden. Diese beiden E-förmigen Sterne sind auf einer gemeinsamen Grundplatte befestigt und bilden eine Baueinheit.

Ausgehend von einer solchen Gleichrichteranlage und dem aus der US-A-3 068 391 sowie der CH-A-285 929 bekannten elektrischen Schaltungsprinzip, liegt der Erfindung die Aufgabe zugrunde, die bekannte Gleichrichteranlage hinsichtlich ihres mechanischen Aufbaues noch weiter zu vereinfachen und kompakt und raumsparend zu gestalten.

Erfindungsgemäss wird diese Aufgabe dadurch gelöst, dass für je zwei der dreiphasigen Teilsysteme der Schaltung nur ein E-förmiger Stern gebildet ist, wobei gegenphasige Wechselstromschienen des ersten und zweiten Teilsystems einer gemeinsamen, einen Schenkel des Sternes bildenden Gleichstromschiene zugordnet und mittels Stützern auf der eine Konsole zur zusätzlichen Abstützung gegenüber dem Tragrahmen aufweisenden Verbindungsschiene befestigt sind. Dadurch ist erreicht, dass die Stromschienen selbst als tragende mechanische Bauelemente verwendet werden können, so dass auf zusätzliche Halterungsmittel weitgehend verzichtet werden kann. Gleichzeitig ist erreicht, dass die Gleichrichter und die zugeordneten Sicherungen von einer Seite aus zugänglich sind und im Bedarfsfall ausgewechselt werden können.

Anhand eines in der Zeichnung dargestellten Ausführungsbeispiels wird die Erfindung im folgenden näher erläutert.

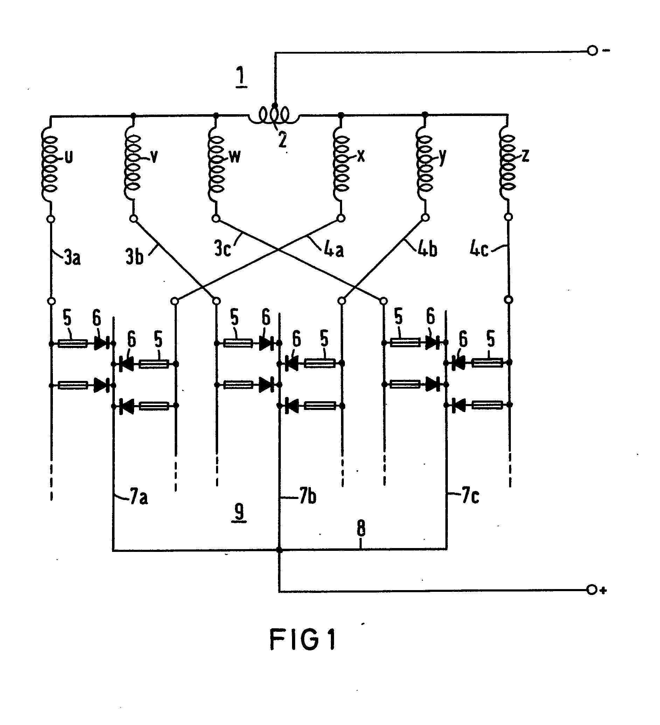

Figur 1 zeigt die sekundärseitigen Wicklungen eines Gleirichtertransformators 1, von denen die Wicklungen u, v und w entgegen dem Wicklungssinn der Wicklungen x, y, z gewickelt und jeweils im Stern geschaltet sind. Die beiden Sterne sind über eine Drossel 2 mit Mittelanzapfung miteinander verbunden. An den Enden der Sekundärwicklungen ist je eine Stromschiene 3a bis 3c bzw. 4a bis 4c angeschlossen. Diese Wechselstrom führenden Schienen sind über Reihenschaltungen aus einer Sicherung 5 und einem Thyristor 6 mit weiterer Gleichstrom führenden Schienen 7a bis 7c, die zusammen mit einer zusätzlichen Gleichstromschiene 8 einen E-förmigen Stern 9 bilden, derart verbunden, dass jeder Gleichstromschiene 7 zwei Wechselstromschienen 3, 4, beispielsweise der Gleichstromschiene 7a die Wechselstromschienen 3a und 4a, zugeordnet sind. In dieser Schaltung beträgt die Stromführungsdauer je Ventilzweig 120° und die Verschiebung zwischen den über die Drossel verbundenen Teilsystemen 60°, so dass die Gleichstromschienen jeweils abwechselnd den Strom eines der beiden Teilsysteme führen.

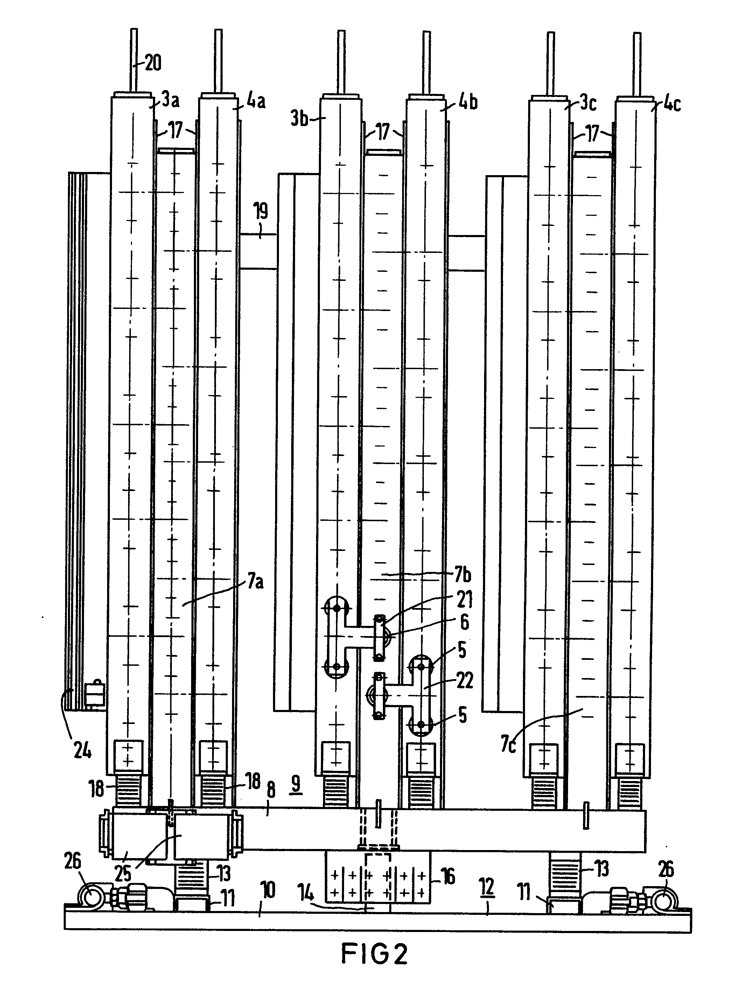

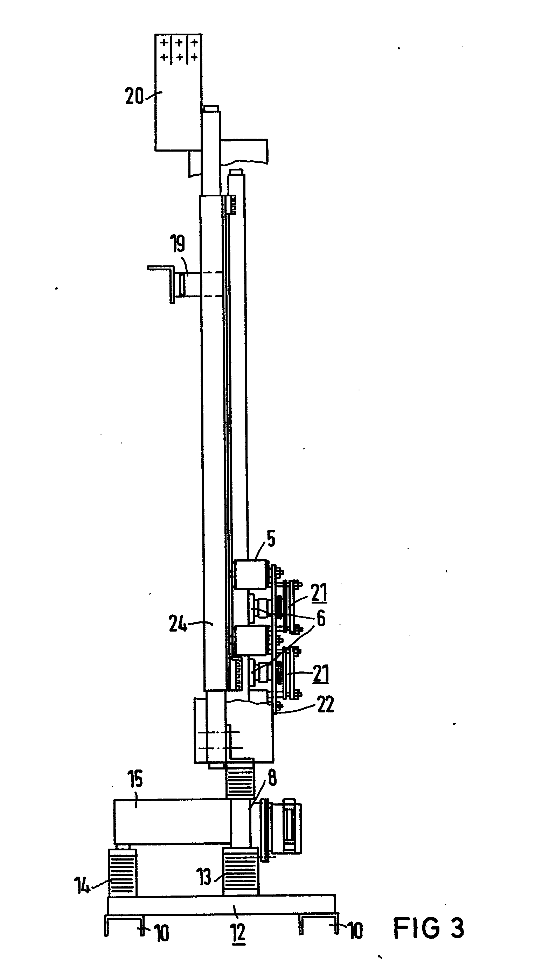

In den Figuren 2 und 3 ist der konstruktive Aufbau für eine sechspulsige Drosselschaltung in selbsttragender Bauweise dargestellt. Auf einem aus beispielsweise im Querschnitt U-förmigen Schienen 10, 11 gebildeten Tragrahmen 12 ist der E-förmige Stern 9 mittels Isolatoren 13, 14 und einer an der zusätzlichen Stromschiene 8 befestigten Konsole 15 abgestützt. Für den Anschluss von Gleichstromverbrauchern ist eine Klemmenplatte 16 mit der Schiene 8 verbunden. Parallel zu einer Seitenfläche jeder der die Schenkel des E-förmigen Sternes bildenden, Gleichstrom führenden Schienen 7a, 7b und 7c erstreckt sich mit geringem Abstand eine Wechselstromschiene 3a, 3b bzw. 3c des einen an die Sekundärwicklungen u, v w des nichtdargestellten Gleichrichtertransformators anzuschliessenden Teilsystems und parallel zu der gegenüberliegenden Seitenfläche eine Wechselstromschiene 4a, 4b bzw. 4c des anderen an die Sekundärwicklungen x, y, z anzuschliessenden Teilsystems. Zwischen der Gleichstromschiene und den zugeordneten Wechselstromschienen sind Leisten 17 aus isolierendem Material angeordnet. Die Wechselstromschienen 3, 4 sind über Stützer 18 auf der Stromschiene 8 befestigt und weiterhin durch eine Halterung 19 in ihrer Lage fixiert. An den freien Enden der Wechselstromschienen sind Anschlussfahnen 20 angeordnet.

Mittels einer Einspannvorrichtung 21, deren Aufbau in diesem Zusammenhang ohne Belang ist, sind die Thyristoren 6 auf den Gleichstromschienen 7 befestigt. Je zwei auf den Wechselstromschienen befestigte Sicherungen 5 sind über ein T-förmiges Anschlussstück 22 einem Thyristor vorgeschaltet. Ferner ist jedem Thyristor ein Steuergerät zugeordnet, dem die Steuersignale über einen an je einer Wechselstromschiene 3a, 3b und 3c befestigten Streifenleiter 24 zuführbar sind. Auf der Gleichstromschiene 8 sind ausserdem Schutzbeschaltungen 25 für die Thyristoren angebracht.

Alle Stromschienen enthalten Kühlkanäle, die an Kühlmittelverteiler 26 angeschlossen sind.

Für eine zwölfpulsige Schaltung ergibt sich ein analoger Aufbau mit zwei E-förmigen Sternen an Stelle der bisher erforderlichen vier Sterne.

**Patentanspruch**

1. Gleichrichteranlage in sechs- oder zwölfpulsiger Saugdrosselschaltung mit gekühlten, im Querschnitt rechteckigen Stromschienen, auf denen die Halbleiterventile (6) bzw. die zugehörigen Sicherungen (5) angeordnet sind, mit aus den Gleichstrom führenden Schienen (7) und je einer zusätzlichen Verbindungsschiene (8) gebildeten E-förmigen Sternen, wobei parallel zu den die Schenkel des Sternes bildenden Gleichstromschienen (7) Wechselstromschienen angeordnet sind und aus dem E-förmigen Stern (9), den Wechselstromschienen und einem Tragrahmen (12), auf dem die Verbindungsschiene (8) über Isolatoren abgestützt ist, eine selbsttragende Baueinheit gebildet ist, dadurch gekennzeichnet, dass für je zwei der dreiphasigen Teilsysteme der Schaltung nur ein E-förmiger Stern gebildet ist, wobei gegenphasige Wechselstromschienen des ersten und zweiten Teilsystems einer gemeinsamen einen Schenkel des Sternes bildenden Gleichstromschiene zugeordnet und mittels Stützern auf der eine Konsole (15) zur zusätzlichen Abstützung gegenüber dem Tragrahmen (12) aufweisenden Verbindungsschiene (8) befestigt sind.

**Claim**

1. A rectifier unit having a six-pulse or twelve-pulse balance coil circuit with cooled conductor rails which are rectangular in cross-section and on which non-linear semiconductor elements (6) or assigned fuses (5) are arranged, as the case may be, the d.c.-carrying rails (7) and an additional connection rail (8) forming an E-shaped star connection with a.c. conductor rails arranged parallel to the d.c. conductor rails (7) that form legs of the star, the E-shaped star (9), the a.c. conductor rails and a supporting frame (12) forming a self-supporting constructional unit on which the connection rail (8) is supported by means of insulators, characterised in that only one E-shaped star is formed for two of the threephase sub-systems of the circuit, where those a.c. conductor rails of the first and second sub-system which are in phase opposition are assigned a common d.c. conductor rail which forms a leg of the star, and secured to the connection rail (8), which has a bracket (15) for additional support opposite the supporting frame (12).

**Revendication**

1. Installation de redressement à circuit à bobine d'absorption opérant à six ou douze impulsions, avec des barres conductrices de section transversale rectangulaire, sur lesquelles sont disposés des redresseurs à semi-conducteur (6) ou les fusibles de sécurité correspondant (5) avec des étoiles en forme de E, constituées par les barres conductrices (7) servant au passage de courant continu et une barre de liaison supplémentaire (8) des barres servant au passage du courant alternatif étant prévues, qui sont parallèles aux barres de passage du courant continu (7) qui forment les branches en l'étoile, et une unité de construction autoportant étant formée avec l'étoile en forme de E (9), les barres de passage de courant alternatif et un cadre de support (12) sur lequel prend appui la barre de liaison (8), par l'intermédiaire d'isolateurs, caractérisé par le fait que pour respectivement deux des systèmes partiels triphasés du circuit on ne forme qu'une seule étoile en forme de E, des barres de passage du courant alternatif, qui sont en opposition de phase et appartenant au premier et au second système partiel, sont associées à une même barre de passage du courant continu, qui forme une branche de l'étoile et sont fixées, à l'aide d'éléments d'appui, sur la barre de liaison (8) comportant une console (15) pour l'appui supplémentaire par rapport au cadre de support (12).

FIG 1

FIG 2

FIG 3